# DEMANDE DE BREVET EUROPEEN

(11) **EP 1 983 429 A1**
(43) Date de publication de la demande: **22.10.2008**
(21) Numéro de dépôt: 08154802.6
(22) Date de dépôt: 18.04.2008
(51) Int. Cl.: G06F 9/445

(54) **Implémentation de programmes correctifs par une unité de traitement**

(30) Priorité: 19.04.2007 FR 0754568
(71) Demandeur: PROTON WORLD INTERNATIONAL N.V., 1930 ZAVENTEM (BE)
(72) Inventeur: Huque, Thierry, 1367 Ramillies (BE); Modave, Jean-Louis, 1340 Ottignies (BE)
(74) Mandataire: de Beaumont, Michel

(57) **Abrégé**

L'invention concerne un procédé et un circuit d'exécution, par une unité de traitement (11), d'au moins un programme correctif d'au moins un premier programme stocké dans une première mémoire non volatile non reprogrammable (12), le programme correctif étant stocké dans une deuxième mémoire (13), et dans lequel : chaque adresse courante (CADD) d'une instruction du premier programme fournie par l'unité de traitement est comparée (53) à des valeurs (ADDi) préchargées dans au moins un élément de mémorisation volatile (31) ; en cas d'identité entre l'adresse courante et une valeur préchargée, une interruption (INTERRUPT) est déclenchée, cette interruption déclenchant une recherche, dans une table de correspondance, d'une adresse de programme correctif dans la deuxième mémoire ; et le programme correctif est exécuté.

## Description

### Domaine de l'invention

La présente invention concerne de façon générale les unités de traitement de données numériques et, plus particulièrement, une unité centrale de traitement (CPU) qui interprète des instructions de programme contenues dans une ou plusieurs mémoires externes à cette unité de traitement.

La présente invention s'applique plus particulièrement aux unités de traitement destinées à exécuter des programmes contenus dans une mémoire non volatile non reprogrammable et susceptibles d'être corrigés ou complétés par des programmes correctifs (patch).

### Exposé de l'art antérieur

Dans une unité de traitement, le ou les programmes d'origine sont stockés dans une mémoire non volatile non reprogrammable (mémoire morte) lors de la fabrication du circuit contenant l'unité. Ces programmes sont susceptibles d'être corrigés ou complétés dans la vie du produit par des codes correctifs chargés en mémoire non volatile reprogrammable ou en mémoire vive (par exemple, pour des correctifs à usage unique). Ces programmes correctifs sont appelés par le programme d'origine prévu, dès sa création, pour faire appel à d'éventuels programmes correctifs ultérieurs.

Une première technique consiste à prévoir, dans le programme d'origine, des instructions d'appel à une table dans une mémoire non volatile reprogrammable du circuit. Lors de l'exécution du programme d'origine, dès que celui-ci arrive sur une de ces instructions d'appel à la mémoire reprogrammable, l'unité de traitement vérifie dans cette mémoire la présence d'un programme correctif à exécuter.

Un inconvénient de cette technique est que les points du programme d'origine à partir desquels peuvent être exécutés des programmes correctifs sont fixés à l'avance dès la fabrication du produit. Par conséquent, soit on multiplie ces points d'appel aux programmes correctifs mais on allonge alors le programme d'origine et sa durée d'exécution, soit on limite le nombre de points d'entrée aux programmes correctifs mais on prend alors le risque de devoir reproduire une grande partie du programme d'origine en programme correctif.

Une deuxième technique est décrite dans la demande de brevet américain n° 2006/0107104 et consiste à comparer les adresses successives du programme en mémoire morte lors de son exécution à des adresses contenues en mémoire vive. Les instructions du programme en mémoire morte sont alors remplacées à la volée par des instructions corrigées issues de la mémoire vive. La mémoire vive contient non seulement l'intégralité du programme correctif mais également l'intégralité des adresses du programme principal devant être remplacées (pas seulement l'adresse de début d'appel à un programme correctif).

Un problème de cette technique est qu'elle requiert une taille de mémoire vive importante. Un tel remplacement à la volée des instructions du code d'origine par un code correctif n'est donc en pratique envisageable que pour des microprocesseurs associés à des mémoires vives importantes. De plus, la technique de remplacement fait appel à un contrôleur spécifique qui prend de la place.

### Résumé de l'invention

La présente invention vise à pallier tout ou partie des inconvénients des mécanismes connus d'application de programmes correctifs.

Un objet vise une solution ne requérant pas de multiples points d'appel dans le programme d'origine.

Un autre objet vise plus particulièrement une solution requérant peu de mémoire vive.

Un autre objet vise une solution peu encombrante.

Un autre objet vise une solution compatible avec une mise en oeuvre dans une carte à puce.

Pour atteindre tout ou partie de ces objets ainsi que d'autres, il est prévu un procédé d'exécution, par une unité de traitement, d'au moins un programme correctif d'au moins un premier programme stocké dans une première mémoire non volatile non reprogrammable, le programme correctif étant stocké dans une deuxième mémoire, et dans lequel :
chaque adresse courante d'une instruction du premier programme fournie par l'unité de traitement est comparée à des valeurs préchargées dans au moins un élément de mémorisation volatile ;
en cas d'identité entre l'adresse courante et une valeur préchargée, une interruption est déclenchée, cette interruption déclenchant une recherche, dans une table de correspondance, d'une adresse de programme correctif dans la deuxième mémoire ; et
le programme correctif est exécuté.

Selon un mode de mise en oeuvre, la deuxième mémoire est une mémoire non volatile reprogrammable.

Selon un mode de mise en oeuvre, le premier programme comporte une routine d'initialisation exécutant un chargement, dans l'élément de mémorisation volatile, desdites valeurs depuis la table de correspondance contenue dans la deuxième mémoire.

Il est également prévu un circuit électronique comportant :
une unité de traitement de programmes ;
au moins une première mémoire non volatile non reprogrammable ;
au moins une deuxième mémoire ; et
un élément de comparaison d'une adresse courante fournie par un compteur programme de l'unité de traitement par rapport à des valeurs préchargées dans un élément de mémorisation volatile.

Selon un mode de réalisation, ladite deuxième mémoire est une mémoire non volatile reprogrammable.

Il est également prévu une carte à puce.

### Brève description des dessins

Ces objets, caractéristiques et avantages, ainsi que d'autres seront exposés en détail dans la description suivante de modes de mise en oeuvre et de réalisation particuliers faite à titre non-limitatif en relation avec les figures jointes parmi lesquelles :
la figure 1 représente une carte à puce du type auquel s'applique à titre d'exemple la présente invention ;
la figure 2 est un schéma-bloc d'un exemple d'architecture d'un circuit électronique comportant une unité de traitement numérique ;
la figure 3 est une représentation partielle d'un mode de réalisation ;
la figure 4 illustre un exemple de contenu de mémoires associées à l'unité de traitement de la figure 3 ; et
la figure 5 est un schéma-blocs fonctionnel d'un mode de mise en oeuvre.

De mêmes éléments ont été désignés par de mêmes références aux différentes figures.

### Description détaillée

Par souci de clarté, seuls les étapes et éléments qui sont utiles à la compréhension de l'invention ont été représentés et seront décrits. En particulier, les fonctions mises en oeuvre par les programmes, qu'ils soient d'origine ou correctif n'ont pas été détaillées, l'invention étant compatible avec tout programme exécuté par une unité de traitement. De même, l'interprétation des instructions d'un programme par l'unité de traitement n'a pas été détaillée, l'invention étant là encore compatible avec les interprétations et exploitations usuelles des instructions d'un programme.

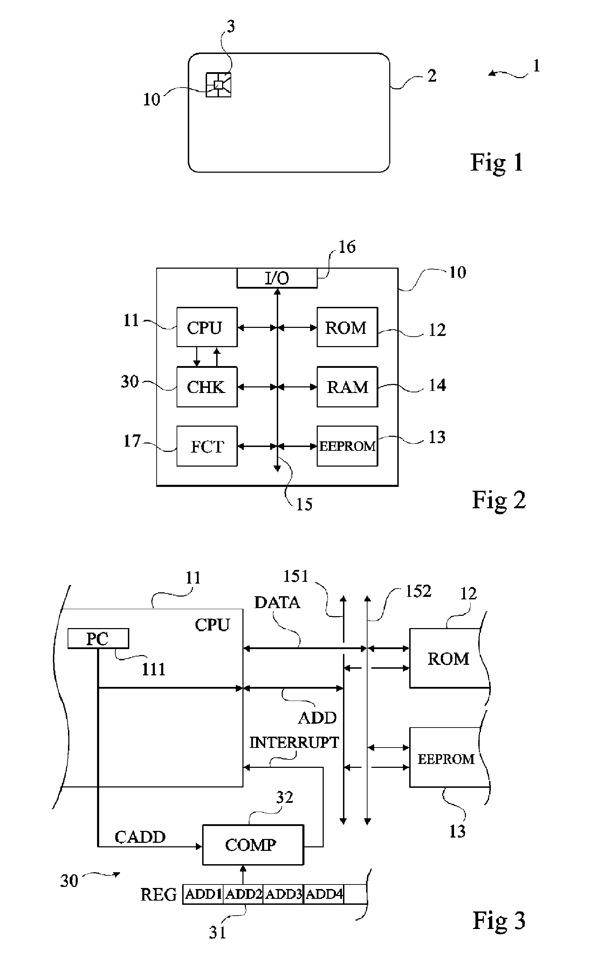

La figure 1 représente, de façon très schématique, une carte à puce 1 du type à laquelle s'applique à titre d'exemple la présente invention. Une telle carte est par exemple constituée d'un support 2 en matière plastique dans ou sur lequel est rapportée une puce 10 de circuit électronique susceptible de communiquer avec l'extérieur au moyen de contacts 3 ou au moyen d'éléments (non représentés) d'émission-réception sans contact. Le circuit 10 de la carte contient une unité de traitement capable d'exécuter des programmes stockés dans des mémoires généralement contenues dans le circuit 10 ou dans d'autres circuits portés par la carte.

La figure 2 est un schéma-bloc d'un mode de réalisation d'un circuit électronique 10. Ce circuit comporte une unité centrale de traitement 11 (CPU) capable d'exécuter des programmes contenus dans une ou plusieurs mémoires. Dans cet exemple, le circuit 10 comporte une mémoire non volatile non reprogrammable 12 (ROM), une mémoire non volatile reprogrammable 13 (EEPROM) et une mémoire vive 14 (RAM). Un ou plusieurs bus 15 de données, d'adresses et de commandes servent de support de communication entre les différents constituants du circuit 10 et avec une interface 16 (I/O) d'entrée/sortie pour communication avec ou sans contact avec l'extérieur. Le plus souvent, le circuit 10 comporte d'autres fonctions (bloc 17, FCT) dépendant de l'application. Il s'agit, par exemple, de cellules de calcul cryptographique dédiées pour mettre en oeuvre des algorithmes de chiffrement et de déchiffrement.

Dans le mode de réalisation représenté en figure 2, le circuit 10 comporte en outre un élément 30 (CHK) de détection d'un appel à un programme correctif.

La figure 3 est un schéma-bloc fonctionnel et partiel du circuit 10 illustrant un mode de réalisation de l'élément 30.

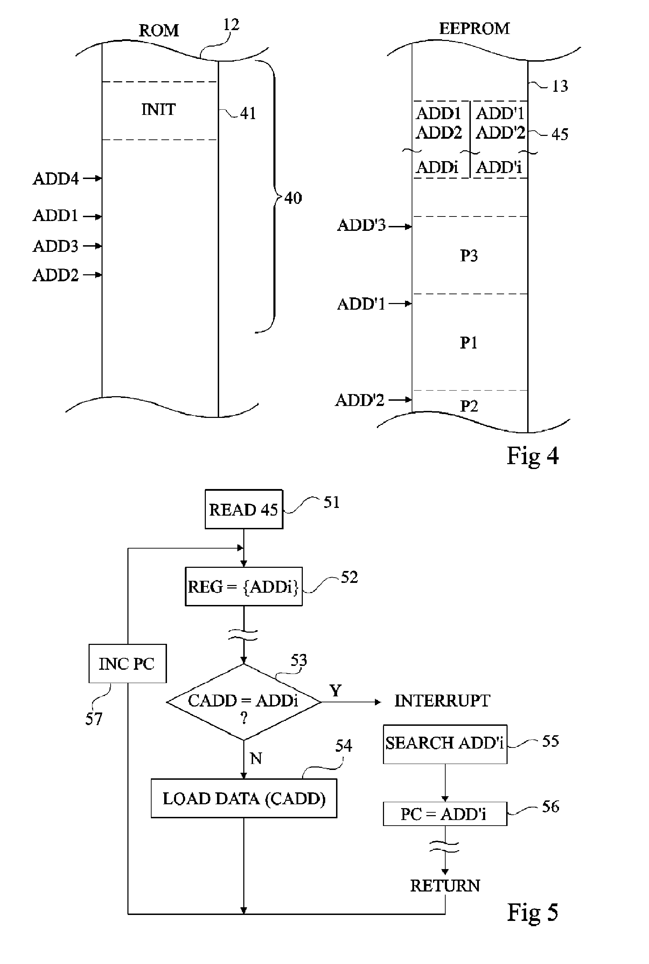

La figure 4 illustre un exemple de contenu d'une mémoire morte et d'une mémoire non volatile reprogrammable du mode de réalisation de la figure 3.

La figure 5 est un organigramme fonctionnel illustrant un exemple de fonctionnement du mode de réalisation de la figure 3.

L'unité de traitement 11 est associée à au moins un élément 31 de mémorisation volatile (par exemple, un registre REG ou une zone de la mémoire volatile 14) destiné à contenir des adresses du ou des programmes (dits d'origine) stockés dans la mémoire non volatile non reprogrammable 12 (ROM) à partir desquelles un programme correctif doit être appliqué. Un ou plusieurs programmes correctifs sont stockés dans une mémoire annexe, par exemple, la mémoire non volatile reprogrammable 13 (EEPROM). En figure 3, les bus d'adresses 151 et de données 152 entre l'unité 11 et les mémoires 12 et 13 ont été représentés.

Un programme d'origine 40 (figure 4), stocké en mémoire morte 12, comporte une séquence d'initialisation 41 (INIT) pour vérifier le besoin d'un éventuel programme correctif. Cette séquence 41 est donc préférentiellement placée près du démarrage du programme d'origine. La routine d'initialisation vérifie, par lecture (bloc 51, figure 5, READ 45) d'une table 45 dans la mémoire annexe 13, la présence d'adresses ADDi (i=1, 2, 3, 4, etc.) du programme d'origine dans la table. Cette table d'adresses 45 comporte les adresses ADD1, ADD2, ADD3, ADD4 du programme d'origine à partir desquelles doivent être appelés des programmes correctifs Pi (P1, P2, P3, etc.). Selon un exemple, la table 45 comporte également des adresses ADD'i (ADD'1, ADD'2, ADD'3, ADD'4, etc.) où sont stockés ces programmes correctifs dans la mémoire annexe (ou dans une autre mémoire). Si des adresses sont présentes dans la table 45, les valeurs des adresses (ADD1, etc.) du programme d'origine sont transférées (bloc 52, REG = {ADDi}) dans le registre 31 et la routine d'initialisation est terminée. En variante, les programmes correctifs sont appelés à des adresses fixes, convenues d'avance (codées en mémoire morte). La table 45 n'a alors pas besoin de contenir d'adresse ADD'i.

Lors de l'exécution de la suite du programme 40, l'unité centrale 11, lorsqu'elle décode les adresses fournies par son compteur programme 111 (PC) pour obtenir une instruction, compare (bloc 53, CADD = ADDi ?) chaque adresse courante CADD aux valeurs contenues dans le registre 31. En cas d'absence d'identité (sortie N du bloc 53), l'instruction est chargée depuis la mémoire 12 pour être exécutée (bloc 54, LOAD DATA(CADD)). Dans le cas contraire (sortie Y du bloc 53), la comparaison 53 déclenche une interruption (INTERRUPT) à destination de l'unité de traitement.

L'unité de traitement met alors en oeuvre un traitement d'interruption similaire à un traitement d'interruption usuel à la différence près qu'il s'agit là d'une interruption de déroutement. L'adresse du compteur programme 111 est sauvegardée de même que divers registres de travail (non représentés). Puis, le compteur programme 111 est chargé avec une adresse correspondant au type d'interruption détecté. Cette adresse contient un saut vers une routine d'interruption (contenue en mémoire 12 ou 13) et cette routine d'interruption va chercher dans la table 45 à quelle adresse ADD'i correspond l'adresse ADDi (bloc 55, SEARCH ADD'i). Cette adresse ADD'i est chargée dans le compteur programme (bloc 56, PC = ADD'i) pour exécution du programme correctif. Une fois le correctif terminé, l'interruption est terminée (RETURN) et l'unité reprend le cours normal du programme d'origine en rechargeant le compteur programme et les registres de travail sauvegardés. Le programme passe alors à l'instruction suivante (bloc 57, INC PC) dont l'adresse est comparée aux valeurs du registre 31, etc.

Un avantage du mode de réalisation décrit est qu'il permet de prévoir, après la mise en place du programme d'origine (donc après fabrication), autant de programmes correctifs que l'on souhaite. En effet, le nombre de programmes correctifs n'est pas limité par des adresses prédéterminées dans le programme d'origine.

Un autre avantage est que seuls quelques éléments de mémorisation temporaire (registre 31) sont requis pour stocker des adresses du programme d'origine auxquelles doivent être effectués les déroutements. Les programmes correctifs de même que la table d'adresses peuvent être stockés en mémoire non volatile reprogrammable.

Un autre avantage est que n'importe quelle zone du programme d'origine peut être corrigée ou complétée.

Un autre avantage induit par la mise en oeuvre décrite est que la taille des programmes d'origine stockés en mémoire morte est réduite. En effet, il n'est plus nécessaire d'y prévoir de multiples points d'entrée vers des programmes correctifs. Le coût en lignes de programme ne provient que de la routine d'initialisation.

Un autre avantage est que cela réduit également la taille des programmes correctifs en rendant plus versatile leurs points d'entrée depuis le programme d'origine.

Le cas échéant, le registre 31 peut également être utilisé pour vérifier le déroulement du programme d'origine en y stockant des adresses considérées comme des points de passage obligés dans le programme d'origine. Le mécanisme d'interruption pointe alors vers un programme correctif se contentant de valider un indicateur de déroulement correct avant de retourner au programme d'origine. En fin de traitement du programme d'origine, si les différentes adresses contenues dans le registre n'ont pas été traitées, le circuit met en oeuvre un traitement d'exception (par exemple un blocage ou une alerte). En variante, le programme correctif effectue divers traitements de vérification du déroulement du programme et/ou de l'état du processus.

Des modes de réalisation particuliers de la présente invention ont été décrits. Diverses variantes et modifications apparaîtront à l'homme de l'art. En particulier, la mise en oeuvre pratique de l'invention que ce soit de façon logicielle ou matérielle est à la portée de l'homme du métier à partir des indications fonctionnelles données ci-dessus, notamment pour ce qui est du choix des adresses servant de vérification éventuelle du déroulement du programme.

De plus, bien que l'invention ait été décrite en relation avec un exemple où les programmes correctifs sont stockés en mémoire non volatile, elle s'applique également au cas où la mémoire annexe est une mémoire volatile dans laquelle sont contenus tout ou partie des programmes correctifs.

## Revendications

1. Procédé d'exécution, par une unité de traitement (11), d'au moins un programme correctif d'au moins un premier programme (40) stocké dans une première mémoire non volatile non reprogrammable (12), le programme correctif étant stocké dans une deuxième mémoire (13, 14), **caractérisé en ce que** :
chaque adresse courante (CADD) d'une instruction du premier programme fournie par l'unité de traitement est comparée (53) à des valeurs (ADDi) préchargées dans au moins un élément de mémorisation volatile (31) ;
en cas d'identité entre l'adresse courante et une valeur préchargée, une interruption (INTERRUPT) est déclenchée, cette interruption déclenchant une recherche (55), dans une table (45) de correspondance, d'une adresse (ADD'i) de programme correctif (Pi) dans la deuxième mémoire ; et
le programme correctif est exécuté.

2. Procédé selon la revendication 1, dans lequel la deuxième mémoire est une mémoire non volatile reprogrammable (13).

3. Procédé selon la revendication 1 ou 2, dans lequel le premier programme (40) comporte une routine d'initialisation (41) exécutant un chargement, dans l'élément de mémorisation volatile (31), desdites valeurs (ADDi) depuis la table de correspondance (45) contenue dans la deuxième mémoire (13).

4. Circuit électronique comportant :
une unité de traitement (11) de programmes ;
au moins une première mémoire (12) non volatile non reprogrammable ; et
au moins une deuxième mémoire (13),
**caractérisé en ce qu'**il comporte:
un élément (32) de comparaison d'une adresse courante (CADD) fournie par un compteur programme (111) de l'unité de traitement par rapport à des valeurs préchargées dans un élément (31) de mémorisation volatile, pour la mise en oeuvre du procédé selon l'une quelconque des revendications 1 à 3.

5. Circuit selon la revendication 4, dans lequel ladite deuxième mémoire est une mémoire non volatile reprogrammable (13).

6. Carte à puce comportant un circuit conforme à la revendication 4 ou 5.
